# EUROPEAN PATENT APPLICATION

(11) **EP 4 675 710 A1**
(43) Date of publication of application: **07.01.2026**
(21) Application number: 23925514.4
(22) Date of filing: 28.11.2023
(51) Int. Cl.: H01M 4/66, H01M 10/0585, H01M 10/0562, H01M 10/052, H01M 4/02

(54) **CURRENT COLLECTOR HAVING ANODIC, CATHODIC, OR BOTH ANODIC AND CATHODIC PROPERTIES AND SECONDARY BATTERY COMPRISING SAME**

(30) Priority: 28.02.2023 KR 20230026958; 14.11.2023 KR 20230157338
(71) Applicant: Framto Inc., Pohang-si Gyeongsangbuk-do 37673 (KR)
(72) Inventor: JUNG, Gwan Ho, Pohang-si Gyeongsangbuk-do 37673 (KR); YOO, Shin, Pohang-si Gyeongsangbuk-do 37673 (KR); KIM, Ki Soo, Pohang-si Gyeongsangbuk-do 37673 (KR); SIM, Young Sub, Pohang-si Gyeongsangbuk-do 37673 (KR)
(74) Representative: Beck & Rössig European Patent Attorneys
(86) International application number: PCT/KR2023/019345
(87) International publication number: WO 2024/181649

(57) **Abstract**

The present invention relates to a current collector having excellent corrosion resistance when a lithium metal negative electrode or a sulfide-based solid electrolyte is applied thereto, and having both negative electrode and positive electrode characteristics, and a secondary battery including the current collector.

The current collector according to the present invention includes a current collector substrate made of an alloy including iron (Fe) and nickel (Ni), and a positive electrode characteristic material layer formed on one surface of the current collector substrate.

## Description

### TECHNICAL FIELD

The present invention has been supported by the National Research and Development Business.
[Project Unique Number] 141588492
[Project Number] 20024818
[Name of Ministry] Ministry of Trade, Industry and Energy
[Project Management (Specialist) Organization Name] Korea Planning & Evaluation Institute of Industrial Technology
[Research Business Name] Materials and Components Technology Development
[Research Project Name] Technology Development for High-Strength, Corrosion-Resistant, Lightweight Current Collector Material for Sulfide-Based All-Solid-State Battery

The present invention relates to a current collector having excellent corrosion resistance when a lithium metal negative electrode or a sulfide-based solid electrolyte is applied thereto, and having a negative electrode characteristic, a positive electrode characteristic, or both negative electrode and positive electrode characteristics, and a secondary battery including the current collector.

### BACKGROUND ART

A lithium secondary battery has the most excellent energy density and output characteristics among various secondary batteries, and thus is widely commercialized. In addition, due to a growing demand for electric vehicles, large-capacity power storage devices, and the like, there is a demand to develop a high-energy battery to meet the demand.

As a method for implementing a high energy density of 400 Wh/kg or greater, a technique for applying a lithium metal negative electrode to a secondary battery has been actively developed. However, in recent years, there have been continuous reports that when a lithium metal is applied to a negative electrode, a copper foil (Cu foil) used as a negative electrode current collector undergoes corrosion, thereby reducing battery life.

Meanwhile, a carbonate-based organic solvent included in a liquid electrolyte, which is currently widely used in a lithium secondary battery, has a problem of having low thermal stability and very high flammability. In order to solve the above-described problem, all-solid-state battery technology using a solid electrolyte has been actively researched, but a problem that a sulfide-based solid electrolyte corrodes a copper foil, which is a current collector, in a sulfide-based all-solid-state battery, which has been researched/developed most actively, is emerging.

In a secondary battery, a current collector serves as a connection medium for supplying electrons or holes provided from an external wire to an electrode active material, or conversely, serves as a carrier for collecting electrons or holes generated as a result of an electrode reaction and allowing the same to flow to an external wire. In addition, the current collector functions as an important support in implementing the shape of an actual electrode plate, and it is important that a metal constituting a current collector is not oxidized in a low potential region in a negative electrode current collector and in a high potential region in a positive electrode current collector. In general, in consideration of the suitability for electrical conductivity, electrochemical stability, an electrode manufacturing process, and the like, a current collector uses copper (Cu) for a negative electrode, and aluminum (Al) or platinum (Pt) for a positive electrode, and an electrode is manufactured by applying an active material slurry on the current collector and drying the same.

However, as described above, a copper foil has a fatal problem of undergoing corrosion in a lithium metal battery and a sulfide-based all-solid-state battery, and aluminum (Al) cannot be used for a negative electrode, and thus, has a problem in that aluminum (Al) alone cannot be used as a current collector having both negative electrode and positive electrode characteristics. In addition, the price of platinum (Pt) is excessively high, resulting in a problem of increasing the price of a battery, so that there is a limitation in that economic efficiency is low in applying platinum (Pt) to a battery and mass producing the battery.

### DISCLOSURE OF THE INVENTION

### TECHNICAL PROBLEM

An object of the present invention is to provide a current collector which is less corrosive even when used with a lithium metal negative electrode or used in a sulfide-based all-solid-state battery and which can also be used as both a positive electrode current collector and a negative electrode current collector.

Another object of the present invention is to provide a secondary battery including the above-described current collector, thereby being able to implement a high energy density.

### TECHNICAL SOLUTION

In order to achieve the above-described objects, the present invention provides current collectors of (1) to (20), and secondary batteries of (21) to (22).
(1) A current collector including a current collector substrate made of an alloy including iron (Fe) and nickel (Ni), and a positive electrode characteristic material layer formed on one surface of the current collector substrate.
(2) A current collector including a current collector substrate made of an alloy including iron (Fe) and nickel (Ni), and a negative electrode characteristic material layer formed on one surface of the current collector substrate.
(3) A current collector including a current collector substrate made of an alloy including iron (Fe) and nickel (Ni), and a positive electrode characteristic material layer formed on one surface of the current collector substrate and a negative electrode characteristic material layer formed on the other surface of the current collector substrate.
(4) In any one current collector of (1) to (3), the alloy including iron (Fe) and nickel (Ni) includes 3 wt% to 32 wt% or 40 wt% to 90 wt% of nickel (Ni), and the remainder being iron (Fe) and inevitable impurities.
(5) In any one current collector of (1) to (4), the current collector substrate has a thickness of 3.5 µm to 20 µm.
(6) In the current collector of (1) or (3), the positive electrode characteristic material layer includes at least one or more selected from the group consisting of aluminum (Al), nickel (Ni), titanium (Ti), and an alloy thereof.
(7) In the current collector of (2) or (3), the negative electrode characteristic material layer includes at least one or more selected from the group consisting of titanium (Ti), vanadium (V), chromium (Cr), manganese (Mn), iron (Fe), cobalt (Co), nickel (Ni), copper (Cu), zinc (Zn), molybdenum (Mo), silver (Ag), tantalum (Ta), tungsten (W), cobalt (Co), gold (Au), ruthenium (Ru), platinum (Pt), iridium (Ir), and an alloy thereof.
(8) In the current collector of (1) or (3), the positive electrode characteristic material layer has a thickness of 0.09 µm to 2 µm.
(9) In the current collector of (2) or (3), the negative electrode characteristic material layer has a thickness of 10 nm to 1 µm.
(10) In any one current collector of (1) to (9), the current collector has a resistivity value of 20×10⁻⁸ Ωm or less.
(11) In any one current collector of (1) to (10), the current collector substrate has an average crystallite size of 15nm or less (excluding 0 nm), and the current collector substrate has a tensile strength of 800 MPa or greater, and an elongation of 2% or greater.
(12) In any one current collector of (1) to (11), the current collector substrate is manufactured by electroforming.
(13) In the current collector of (1) or (3), the positive electrode characteristic material layer includes a metal oxide layer, and the metal oxide layer has a gradient composition in which the oxygen concentration increases continuously or intermittently toward the surface from the current collector substrate side.
(14) In the current collector of (2) or (3), the negative electrode characteristic material layer includes a metal oxide layer, and the metal oxide layer has a gradient composition in which the oxygen concentration increases continuously or intermittently toward the surface from the current collector substrate side.
(15) In the current collector of (3), the positive electrode characteristic material layer includes a metal oxide layer, and the negative electrode characteristic material layer includes a metal oxide layer, wherein the metal oxide layers respectively included in the positive electrode characteristic material layer and the negative electrode characteristic material layer have a gradient composition in which the oxygen concentration increases continuously or intermittently toward the surface from the current collector substrate side.
(16) In any one current collector of (13) to (15), the current collector further includes a metal layer positioned between the current collector substrate and the metal oxide layer.
(17) In any one current collector of (13) to (15), a metal constituting the metal oxide layer and a metal constituting the metal layer are the same.
(18) In the current collector of (16), the metal oxide layer has a thickness of 4.5 nm to 1 µm.
(19) In any one current collector of (13) to (15), the metal oxide layer has a composition represented by Formula 1 below, overall.

   [Formula 1] TiOₓ (0<x<2)
(20) In any one current collector of (13) to (15), the metal oxide layer is formed by physical vapor deposition (PVD).
(21) A secondary battery including a first current collector, a first positive electrode active material layer formed on the first current collector, a first electrolyte layer formed on the first positive electrode active material layer, a first negative electrode active material layer formed on the first electrolyte layer, a second current collector formed on the first negative electrode active material layer, a second positive electrode active material layer formed on the second current collector, a second electrolyte layer formed on the second positive electrode active material layer, a second negative electrode active material layer formed on the second electrolyte layer, and a third current collector formed on the second negative electrode active material layer, wherein the second current collector is the current collector which has both negative electrode and positive electrode characteristics as set forth in (3) or (15).
(22) In the current collector of (21), the first electrolyte layer and the second electrolyte layer include a solid electrolyte.

### ADVANTAGEOUS EFFECTS

A current collector according to the present invention includes a current collector substrate made of an alloy including iron (Fe) and nickel (Ni), and thus, has excellent corrosion resistance when used as a current collector for a secondary battery to which a lithium metal negative electrode or a sulfide-based solid electrolyte is applied. Accordingly, it is possible to implement a lithium metal battery and an all-solid-state battery which are capable of improving capacity and output characteristics and improve the stability of the battery.

In addition, a current collector according to an embodiment of the present invention includes, on one side of a current collector substrate, a metal oxide layer in which the oxygen concentration increases toward the surface side from the substrate side, and thus, may improve battery characteristics while further improving corrosion resistance when used as a current collector for a secondary battery to which lithium ions and a lithium metal negative electrode or a sulfide-based solid electrolyte are applied.

In addition, a current collector according to an embodiment of the present invention includes a current collector substrate manufactured by electroforming, wherein the current collector substrate is made of ultra-fine particles through the electroforming, thereby having excellent corrosion resistance as well as high strength, so that it is possible to implement weight reduction and high capacity through reducing the amount of usage of the current collector and increasing an active material.

In addition, a secondary battery according to an embodiment of the present invention includes a positive electrode active material layer formed on one surface of a current collector and includes a negative electrode active material layer formed on the other surface thereof, so that it is possible to implement a lightweight and high-capacity secondary battery through reduction in the usage of the current collector.

In addition, a secondary battery according to an embodiment of the present invention is applied with a current collector on which a metal oxide layer is formed, so that it is possible to further improve corrosion resistance of the secondary battery.

### BRIEF DESCRIPTION OF THE DRAWINGS

FIG. 1 shows a cross-sectional structure of a current collector according to a first embodiment of the present invention.
FIG. 2 shows a cross-sectional structure of a current collector according to a second embodiment of the present invention.
FIG. 3 shows a cross-sectional structure of a current collector according to a third embodiment of the present invention.
FIG. 4 shows a cross-sectional structure of a current collector according to a fourth embodiment of the present invention.
FIG. 5 illustrates a cross-sectional structure of a secondary battery according to a fifth embodiment of the present invention.
FIG. 6 illustrates a cross-sectional structure of a secondary battery according to a sixth embodiment of the present invention.
FIG. 7 illustrates a cross-sectional structure of a secondary battery according to a seventh embodiment of the present invention.
FIG. 8 illustrates a cross-sectional structure of a secondary battery according to an eighth embodiment of the present invention.
FIG. 9 is a schematic view of a process and a manufacturing apparatus for manufacturing the current collectors according to the first embodiment to the fourth embodiment of the present invention.

### BEST MODE FOR CARRYING OUT THE INVENTION

Hereinafter, embodiments of the present application will be described in detail with reference to the accompanying drawings so that those skilled in the art to which the present application pertains may easily practice the embodiments. However, the present application may be embodied in many different forms and should not be construed as limited to the embodiments set forth herein.

In addition, in order to clearly describe the present application, parts irrelevant to the description thereof are omitted in the drawings, and like reference numerals designate like elements throughout the specification.

Throughout the present specification, when a part is referred to as being "connected" to another part, it includes not only the case of "being directly connected," but also the case of "being electrically connected" having another element therebetween.

Throughout the present specification, when a member is referred to as being "on," "in an upper portion of," "at an upper end of," "under," "in a lower portion of," "at a lower end of" another member, it includes not only the case in which one member is in contact with another member, but also the case in which yet another member is present between the two members.

Throughout the present specification, when a part is referred to as "including" another component, it means the part may further include other components, rather than excluding other components, unless specifically stated otherwise.

Throughout the specification, the term "an alloy thereof" included in an expression of the Markush form refers to one or more mixtures or combinations selected from the group consisting of components described in the expression of the Markush form, and refers to an alloy including one or more selected from the group consisting of the components.

Throughout the present specification, the description of "A and/or B" means "A or B, or A and B."

### <Current collector and all-solid-state battery>

### [First embodiment]

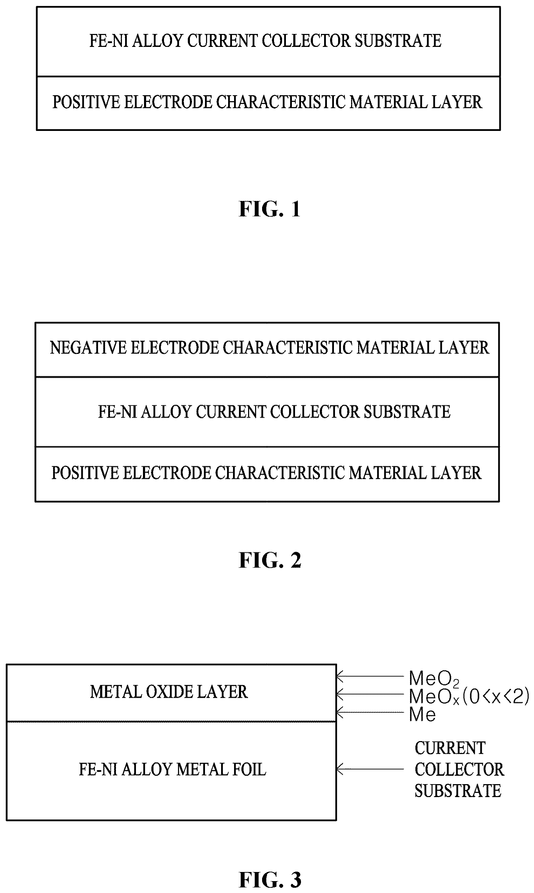

FIG. 1 shows a cross-sectional structure of a current collector according to a first embodiment of the present invention.

Referring to FIG. 1, the current collector according to the first embodiment includes a current collector substrate made of an Fe-Ni-based alloy including iron (Fe) and nickel (Ni), and a positive electrode characteristic material layer formed on one surface (lower surface in the drawing) of the current collector substrate.

The Fe-Ni alloy may preferably include 3 wt% to 90 wt% of nickel (Ni), more preferably 3 wt% to 32 wt% or 40 wt% to 90 wt% of nickel (Ni).

If the thickness of the current collector substrate is less than 3.5 µm, it is not possible to form a normal foil, and if greater than 20 µm, the volume of the current collector increases, thereby significantly reducing the coating amount of an active material, so that it is preferable that the thickness of the current collector substrate is 3.5 µm to 20 µm, more preferably 4 µm to 12 µm.

The average crystallite size of the current collector substrate is preferably 15 nm or less (excluding 0 nm), and this is because it is possible to implement excellent strength through a fine crystallite size.

The current collector substrate preferably has a tensile strength of 800 MPa or greater and an elongation of 2% or greater.

The current collector substrate may be manufactured by electroforming, so that it is easy to obtain a foil having a fine crystallite size.

The positive electrode characteristic material layer may include, for example, at least one or more selected from the group consisting of aluminum (Al), nickel (Ni), titanium (Ti), and an alloy thereof, and may preferably be aluminum (Al). In addition, the thickness of the positive electrode characteristic material layer may be, for example, 0.09 µm to 2 µm.

In the current collector according to the first embodiment, a surface on which the positive electrode characteristic material layer is formed has positive electrode characteristics, and thus may be used as a positive electrode current collector, and a surface on which the positive electrode characteristic material layer is not formed has negative electrode characteristics, and thus may be used as a negative electrode current collector.

The resistivity of the current collector according to the first embodiment may preferably have a value of 20×10⁻⁸ Ωm or less.

### [Second embodiment]

FIG. 2 shows a cross-sectional structure of a current collector according to a second embodiment of the present invention.

Referring to FIG. 2, the current collector according to the second embodiment includes a current collector substrate made of the same Fe-Ni-based alloy as that of the first embodiment, a positive electrode characteristic material layer formed on one surface (lower surface in the drawing) of the current collector substrate, and a negative electrode characteristic material layer formed on the other surface (upper surface in the drawing) of the current collector substrate.

The positive electrode characteristic material layer may be formed in the same manner as in the first embodiment.

The negative electrode characteristic material layer may include, for example, at least one or more selected from the group consisting of titanium (Ti), vanadium (V), chromium (Cr), manganese (Mn), iron (Fe), cobalt (Co), nickel (Ni), copper (Cu), zinc (Zn), molybdenum (Mo), silver (Ag), tantalum (Ta), tungsten (W), cobalt (Co), gold (Au), ruthenium (Ru), platinum (Pt), iridium (Ir), and an alloy thereof, and may preferably be titanium (Ti), nickel (Ni), silver (Ag), or an alloy thereof. In addition, the thickness of the negative electrode characteristic material layer may be 10 nm to 1 µm.

The resistivity of the current collector according to the second embodiment may preferably have a value of 20×10⁻⁸ Ωm or less.

### [Third embodiment]

FIG. 3 shows a cross-sectional structure of a current collector according to a third embodiment of the present invention.

Referring to FIG. 3, the current collector according to the third embodiment includes a current collector substrate made of the same Fe-Ni-based alloy as that of the first embodiment, and a metal oxide layer formed on one side of the current collector substrate.

The metal oxide layer may have a gradient composition in which the oxygen concentration increases continuously or intermittently toward the surface from the current collector substrate side. Among these, the gradient composition in which the oxygen concentration increases intermittently may have 2 or more sub-layers and be in a form in which the oxygen concentration of each sub-layer increases from a sub-layer of the substrate side to a sub-layer of a surface layer. In addition, each sub-layer may be formed of a single compound, or may be in the form of a mixture, for example, a mixture layer of a metal (Me) + a metal oxide (MeOₓ, a low oxygen concentration) -> a mixture layer of a metal oxide (MeOₓ, a low oxygen concentration) + a metal oxide (MeO₂, a high oxygen concentration) -> a layer of a metal oxide (MeO₂, a high oxygen concentration), in which the oxygen concentration is adjusted.

Meanwhile, in FIG. 3, MeO₂ is presented as a metal oxide having a high oxygen concentration, but since the stoichiometric number of oxygen atoms varies depending on a metal element to be applied, it should be understood that MeO₂ is exemplarily presented.

The metal oxide layer serves to improve corrosion resistance by increasing the oxygen concentration towards the surface while allowing the current collector to have positive electrode or negative electrode characteristics.

If the thickness of the metal oxide layer is less than 4.5 nm, it is not sufficiently corrosion-resistant, and if greater than 1 µm, it is not economical, so that it is preferable that the thickness is maintained in the range of 4.5 nm to 1 µm, more preferably 4.75 nm to 50 nm, and even more preferably 4.75 nm to 20 nm.

A metal layer (Me) may be selectively further included between the current collector substrate and the metal oxide layer as illustrated in FIG. 3, thereby further improving the positive electrode or negative electrode characteristics of the metal oxide layer, and in this case, it is preferable that the metal layer and the metal oxide layer maintain a combined thickness of 1 µm or less. Considering the corrosion resistance and the positive electrode or negative electrode characteristics, it is preferable that the combined thickness of the metal layer and the metal oxide layer is preferably in the range of 9.5 nm to 1 µm.

A metal constituting the metal oxide layer may include at least one or more selected from the group consisting of titanium (Ti), vanadium (V), chromium (Cr), manganese (Mn), iron (Fe), cobalt (Co), nickel (Ni), copper (Cu), zinc (Zn), molybdenum (Mo), silver (Ag), tantalum (Ta), tungsten (W), cobalt (Co), gold (Au), ruthenium (Ru), platinum (Pt), iridium (Ir), and an alloy thereof.

The metal oxide layer may have, for example, a composition represented by Formula 1 below, overall.

[Formula 1] TiOₓ(0<x<2)

The resistivity of the current collector according to the third embodiment may preferably have a value of 20×10⁻⁸ Ωm or less.

### [Fourth embodiment]

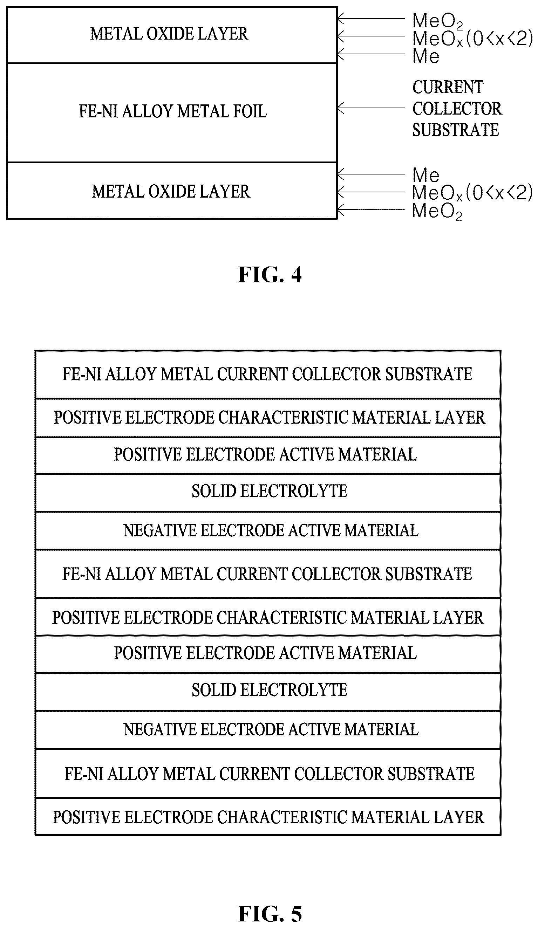

FIG. 4 shows a cross-sectional structure of a current collector according to a fourth embodiment of the present invention.

Referring to FIG. 4, the current collector according to the fourth embodiment includes a current collector substrate made of the same Fe-Ni-based alloy as that of the first embodiment, and a metal oxide layer formed on both sides of the current collector substrate.

As described above, when the metal oxide layer is formed on both sides of the current collector substrate, it is possible to configure a battery by applying a positive electrode active material or a negative electrode active material on both sides of a current collector. In this case, the same material, or different materials may be applied to the metal oxide layers formed on one side of the current collector substrate and on the other side thereof, in which case a material capable of strengthening positive electrode characteristics or negative electrode characteristics may be selected.

The resistivity of the current collector according to the fourth embodiment may preferably have a value of 20×10⁻⁸ Ωm or less.

### [Fifth embodiment]

FIG. 5 illustrates a cross-sectional structure of a secondary battery according to a fifth embodiment of the present invention.

Referring to FIG. 5, the secondary battery according to the fifth embodiment has a structure composed of three current collectors according to the first embodiment, each having a positive electrode characteristic material layer formed on one side thereof, and a positive electrode active material layer, a solid electrolyte layer, and a negative electrode active material layer formed between the current collector and the current collector.

In this case, the positive electrode active material layer is formed on a surface on which the positive electrode characteristic material layer of the current collector is formed, and the negative electrode active material layer is formed on an opposite surface on which the positive electrode characteristic material layer is not formed.

The positive electrode active material layer may include various positive electrode active materials known in the art, and the negative electrode active material layer may also include various negative electrode active materials known in the art, and may preferably include a lithium metal.

In an all-solid-state battery having the above-described structure, a positive electrode active material layer may be formed on one surface of a current collector positioned in the middle, and a negative electrode active material layer may be formed on the other surface thereof, which makes it possible to reduce the amount of usage of a current collector compared to a secondary battery using separate current collectors for a positive electrode and for a negative electrode, so that it is possible to implement a lightweight high-capacity battery.

### [Sixth embodiment]

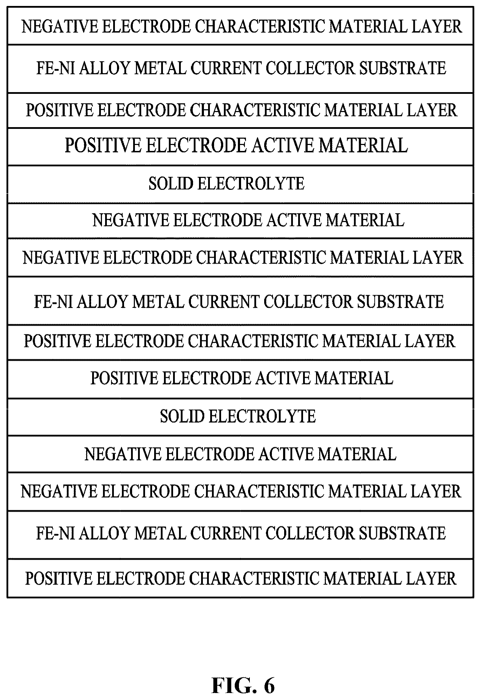

FIG. 6 illustrates a cross-sectional structure of a secondary battery according to a sixth embodiment of the present invention.

Referring to FIG. 6, the secondary battery according to the sixth embodiment has a structure composed of three current collectors according to the second embodiment, each having a positive electrode characteristic material layer formed on one surface of a current collector substrate made of an Fe-Ni alloy and a negative electrode characteristic material layer formed on the other surface thereof, and a positive electrode active material layer, a solid electrolyte layer, and a negative electrode active material layer formed between the current collector and the current collector.

In this case, the positive electrode active material layer is formed on a surface on which the positive electrode characteristic material layer of the current collector is formed, and the negative electrode active material layer is formed on a surface on which the negative electrode characteristic material layer is not formed.

In an all-solid-state battery having the above-described structure, a positive electrode active material layer may be formed on one surface of a current collector positioned in the middle, and a negative electrode active material layer may be formed on the other surface thereof, which makes it possible to reduce the amount of usage of a current collector compared to a secondary battery using separate current collectors for a positive electrode and for a negative electrode, so that it is possible to implement a lightweight high-capacity battery. In addition, a negative electrode and a positive electrode may be provided with a metal oxide layer capable of improving respective characteristics, so that battery characteristics may be further improved.

### [Seventh embodiment]

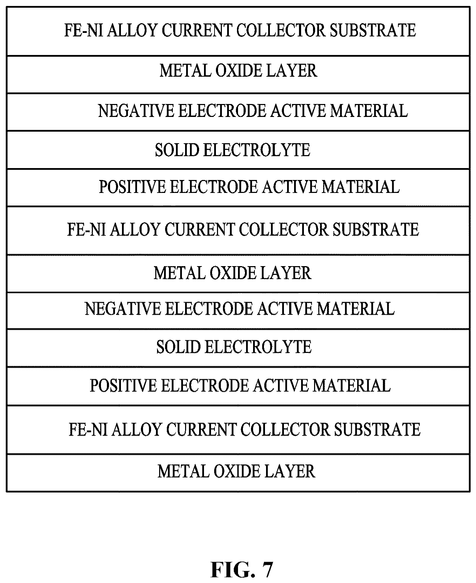

FIG. 7 illustrates a cross-sectional structure of a secondary battery according to a seventh embodiment of the present invention.

Referring to FIG. 7, the secondary battery according to the seventh embodiment has a structure composed of three current collectors, each having a current collector substrate made of an Fe-Ni-based alloy and a metal oxide layer formed on one surface (lower surface in the drawing) of the current collector substrate, and a positive electrode active material layer, a solid electrolyte layer, and a negative electrode active material layer formed between the current collector and the current collector.

In this case, the negative electrode active material layer is formed on a surface on which the metal oxide layer of the current collector is formed, and the positive electrode active material layer is formed on a surface on which the metal oxide layer is not formed.

The positive electrode active material layer may include various positive electrode active materials known in the art, and the negative electrode active material layer may also include various negative electrode active materials known in the art, and may preferably include a lithium metal.

In an all-solid-state battery having the above-described structure, a positive electrode active material layer may be formed on one surface of a current collector positioned in the middle, and a negative electrode active material layer may be formed on the other surface thereof, which makes it possible to reduce the amount of usage of a current collector compared to a secondary battery using separate current collectors for a positive electrode and for a negative electrode, so that it is possible to implement a lightweight high-capacity battery.

### [Eighth embodiment]

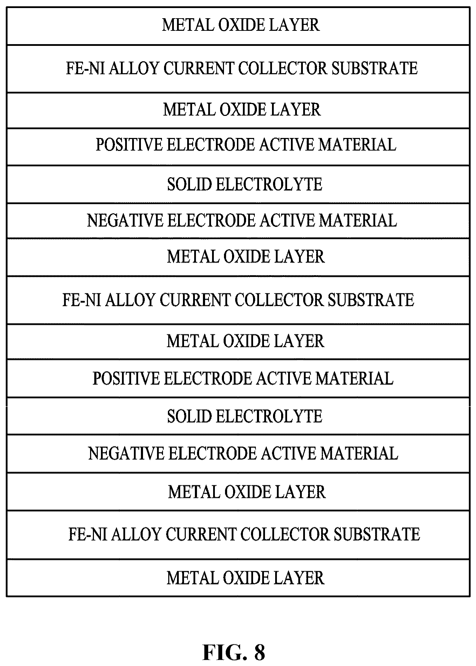

FIG. 8 illustrates a cross-sectional structure of a secondary battery according to an eighth embodiment of the present invention.

Referring to FIG. 8, the secondary battery according to the eighth embodiment has a structure composed of three current collectors, each having a current collector substrate made of an Fe-Ni-based alloy and a metal oxide layer formed on both surfaces of the current collector substrate, and a positive electrode active material layer, a solid electrolyte layer, and a negative electrode active material layer formed between the current collector and the current collector.

In this case, the metal oxide layers formed on both surfaces of the current collector may be the same, or may be layers to which either negative electrode characteristics or positive electrode characteristics are imparted, and in this case, it is preferable that the negative electrode active material layer is formed on a metal oxide layer to which the negative electrode characteristics are imparted, and the positive electrode active material layer is formed on a metal oxide layer to which the positive electrode characteristics are imparted.

In an all-solid-state battery having the above-described structure, a positive electrode active material layer may be formed on one surface of a current collector positioned in the middle, and a negative electrode active material layer may be formed on the other surface thereof, which makes it possible to reduce the amount of usage of a current collector compared to a secondary battery using separate current collectors for a positive electrode and for a negative electrode, so that it is possible to implement a lightweight high-capacity battery. In addition, a negative electrode and a positive electrode may be provided with a metal oxide layer capable of improving respective characteristics, so that battery characteristics may be further improved.

### <Examples>

### [Manufacturing of current collector]

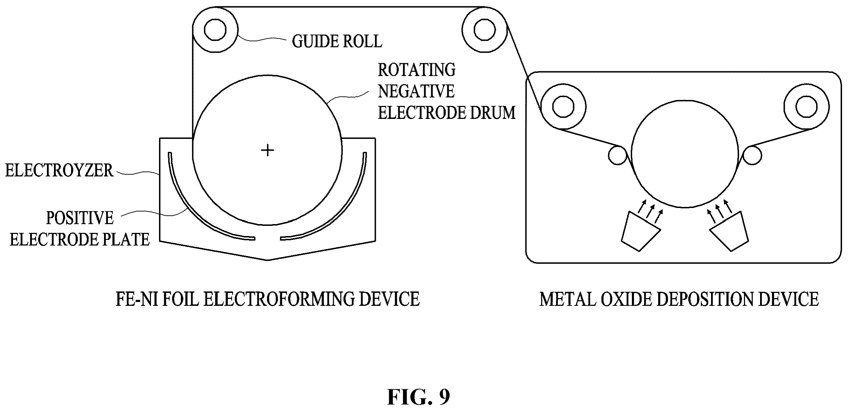

FIG. 9 is a schematic view of a process and a manufacturing apparatus for manufacturing the current collectors according to the first embodiment to the fourth embodiment of the present invention.

As illustrated in FIG. 9, a process of manufacturing the current collectors according to the first embodiment to the fourth embodiments of the present invention includes a process of manufacturing a current collector substrate made of an Fe-Ni alloy through electroforming, and a process of coating a metal oxide layer (including forming a metal layer) on the Fe-Ni alloy substrate through a deposition process.

As a method for manufacturing an Fe-Ni alloy metal foil, there are roll-pressing and electroforming, and in an embodiment of the present invention, an Fe-Ni alloy foil is manufactured by electroforming, but the present invention is not necessarily limited thereto.

As an example for manufacturing an Fe-Ni-based alloy foil by electroforming, an Fe-Ni alloy foil composed of an iron concentration of 1 g/L to 80 g/L, a nickel concentration of 5 g/L to 200 g/L, a stress reliever of 1.0 g/L to 20 g/L, a conduction aid of 5 g/L to 40 g/L, and a pH stabilizer of 5 g/L to 40 g/L may be manufactured under the conditions of a pH of 1.0 to 5.0, a current density of 1 A/dm² to 80 A/dm², a plating solution temperature of 40 °C to 90°C, and a flow rate of 0.2 m/sec to 5 m/sec.

In this case, the iron may be dissolved in the form of a salt such as iron sulfate, iron chloride, and iron sulfamate and then used, or may be supplied by dissolving electrolytic iron and iron powder in hydrochloric acid or sulfuric acid. In addition, the nickel may be supplied in the form of a salt such as nickel chloride, nickel sulfate, and nickel sulfamate, or by dissolving ferronickel and the like in an acid. Saccharin and the like may be used as the stress reliever, sodium chloride and the like may be used as the conduction aid, and boric acid, citric acid, and the like may be used as the pH stabilizer.

The current collector substrate made of the Fe-Ni alloy foil manufactured by the above-described electroforming method is thin with a thickness of about 4 µm to 20 µm, while having a small average crystallite size of 15 nm or less, and thus, has excellent mechanical properties of a tensile strength of 800 MPa or greater and an elongation of 2% or greater.

As illustrated in FIG. 9, on one surface of the current collector substrate manufactured by the electroforming method, an aluminum (Al) layer is formed as a positive electrode characteristic material layer, and a titanium (Ti), nickel (Ni), or copper (Cu) layer is formed as a negative electrode characteristic material layer through a vacuum deposition method (thermal deposition) known in the art.

The current collector according to the first embodiment or the second embodiment was manufactured in the above-described manner, and the thicknesses and the components of the Fe-Ni substrate, the negative electrode characteristic material layer, and the positive electrode characteristic material layer constituting the current collectors are shown in Table 1 below.

**[Table 1]**

| Configuration | Fe-Ni substrate* | | Negative electrode characteristic material layer thickness (µm) | Positive electrode characteristic material layer thickness (µm) | Notes |
|---|---|---|---|---|---|
| | Thickness (µm) | Ni composition (wt%) | | | |
| Example 1 | 4 | 30 | - | 0.1 | Positive electrode material: Al |
| Example 2 | 4 | 42 | - | 0.1 | Positive electrode material: Al |
| Example 3 | 4 | 30 | 0.1 | 1.0 | Positive electrode material: Al |
| | | | | | Negative electrode material: Ti |
| Example 4 | 4 | 42 | 0.1 | 1.0 | Positive electrode material: Al |
| | | | | | Negative electrode material: Ti |
| Example 5 | 6 | 30 | 0.1 | 0.1 | Positive electrode material: Al |
| | | | | | Negative electrode material: Ti |
| Example 6 | 6 | 42 | 0.1 | 0.1 | Positive electrode material: Al |
| | | | | | Negative electrode material: Ti |
| Example 7 | 6 | 30 | 0.1 | 1.0 | Positive electrode material: Al |
| | | | | | Negative electrode material: Ti |
| Example 8 | 8 | 30 | 0.1 | 1.0 | Positive electrode |
| | | | | | material: Al |
| | | | | | Negative electrode material: Ti |
| Comparative Example 1 | 4 | 34 | - | - | |
| Comparative Example 2 | 4 | 38 | - | - | |
| Comparative Example 3 | 4 | 30 | - | 0.08 | Positive electrode material: Al |
| Comparative Example 4 | 4 | 42 | - | 0.08 | Positive electrode material: Al |
| Comparative Example 5 | 6 | 34 | - | - | |
| Comparative Example 6 | 6 | 38 | - | - | |
| Comparative Example 7 | 6 | 30 | 0.1 | 0.08 | Positive electrode material: Al |
| | | | | | Negative electrode material: Ti |
| Comparative Example 8 | 6 | 42 | 0.1 | 0.08 | Positive electrode material: Al |
| | | | | | Negative electrode material: Ti |
| Comparative Example 9 | 3 | 36 | 0.1 | 1.0 | Positive electrode material: Al |
| | | | | | Negative electrode material: Ti |
| Comparative Example 10 | 3 | 48 | 0.1 | 1.0 | Positive electrode material: Al |
| | | | | | Negative electrode material: Ti |

*The content of Fe in the Fe-Ni substrate is the remainder excluding Ni and impurities inevitably included during the process.

Next, on one surface of the Fe-Ni alloy current collector substrate manufactured by the electroforming method, a titanium (Ti) layer and a titanium oxide layer were formed to a thickness of about 4 nm to 10 nm (the total thickness of the titanium and the titanium oxide layer) through the above-described vacuum deposition method (electron beam deposition).

The titanium oxide layer was formed to have a gradient composition in which the oxygen content increases from the current collector substrate to the current collector surface by first forming a titanium (Ti) layer, and then controlling conditions for forming a titanium oxide (TiO) to form a "first oxide layer" in which titanium (Ti) and a titanium oxide (TiOx, 0<x≤2) are present in a mixed state, followed by forming a "second oxide layer" made of titanium dioxide (TiO₂) to a predetermined thickness.

The current collector according to the third embodiment was manufactured in the above-described manner, and the thickness of the Fe-Ni-based alloy current collector, and the thicknesses of the first oxide layer and the second oxide layer constituting the current collector are as follows.

**[Table 2]**

| Compositions | Fe-Ni substrate* Thickness (µm) | Metal layer (Ti) Thickness (nm) | First oxide layer (Ti + TiOₓ) Thickness (nm) | Second oxide layer (TiO₂) Thickness (nm) |
|---|---|---|---|---|
| Example 9 | 4 | 5 | 2 | 3 |
| Example 10 | 4 | 5 | 3 | 2 |
| Example 11 | 4 | 5 | 4 | 1 |
| Example 12 | 4 | 5 | 2 | 3 |
| Example 13 | 4 | 5 | 3 | 2 |
| Example 14 | 4 | 5 | 4 | 1 |
| Comparative Example 11 | 4 | 10 | 0 | 0 |
| Comparative Example 12 | 4 | 8 | 1 | 1 |
| Comparative Example 13 | 4 | 6 | 2 | 2 |
| Comparative Example 14 | 4 | 4 | 2 | 3 |
| Comparative Example 15 | 4 | 4 | 3 | 2 |
| Comparative Example 16 | 4 | 4 | 4 | 1 |

### [Manufacturing of all-solid-state battery]

An all-solid-state battery was manufactured by the following method to confirm whether the all-solid-state battery can be driven as a battery when each of the current collectors according to Examples 1 to 8 and Comparative Examples 1 to 10 is applied thereto. The entire manufacturing process of the all-solid-state battery is as follows.
① A negative electrode active material layer is coated on a current collector substrate or a substrate coated with a negative electrode characteristic material layer.
② A solid electrolyte is coated on the negative electrode active material layer of a portion of the current collector coated with a negative electrode active material.
③ A positive electrode active material layer is coated on a positive electrode characteristic material layer of another current collector.
④ A solid electrolyte is coated on a negative electrode active material of a current collector in which the negative electrode active material and the positive electrode active material prepared in ③ above are respectively coated on different surfaces.
⑤ The current collector prepared in ② above with one surface coated with the negative electrode active material and the solid electrolyte, the current collector prepared in ④ coated with the solid electrolyte, and the current collector prepared in ③ coated with the positive active material are all laminated, packaged, and pressurized (e.g., pressurized using hydrostatic pressure) to manufacture an all-solid-state battery as illustrated in FIG. 5 or FIG. 6.

The negative electrode active material layer, the positive electrode active material layer, and the solid electrolyte used in the all-solid-state battery will be described in detail.

### Negative electrode active material layer

A slurry is prepared by mixing a material (a negative electrode active material, a binder, etc.) constituting a negative electrode active material layer with a polar solvent or a non-polar solvent. Subsequently, as illustrated in FIG. 5 or FIG. 6, the obtained slurry is coated on a negative electrode characteristic material layer coated on an Fe-Ni alloy metal current collector, and dried to manufacture a negative electrode active material layer.

The negative electrode active material layer includes at least one of a negative electrode active material forming an alloy with lithium and a negative electrode active material forming a compound with lithium. In addition, the negative electrode active material layer contains the above-described negative electrode active material, and as to be described below, may be configured to allow lithium metal to be plated on the surface of one side or both sides of the negative electrode active material layer. The negative electrode active material layer may further include a binder, if necessary. The binder may be, for example, styrene butadiene rubber (SBR), polytetrafluoroethylene (PET), polyvinylidene fluoride, polyethylene oxide, or the like. The binder may be composed of one or two or more thereof. By including the binder in the negative electrode active material layer as described above, it is possible to suppress the separation of the negative electrode active material layer, particularly when the negative electrode active material is in a particulate phase. The content of the binder contained in the negative electrode active material layer is 3.0 wt% to 15.0 wt% with respect to the total mass of the negative electrode active material layer. In addition, in the negative electrode active material layer, an additive used in a typical all-solid-state secondary battery, for example, a filler, a dispersion material, an ionic conductor, and the like may be appropriately blended.

The thickness of the negative electrode active material layer is not particularly limited when the negative electrode active material is in a particulate phase, but for example, may be 1.0 µm to 20.0 µm, preferably 1.0 µm to 10.0 µm. By achieving the thickness in the above-described range, it is possible to sufficiently lower the resistance value of the negative electrode active material layer while sufficiently obtaining the above-described effects of the negative electrode active material layer, so that it is possible to sufficiently improve characteristics of the all-solid secondary battery. Meanwhile, the thickness of the negative electrode active material layer is, for example, 1.0 nm to 100.0 nm when the negative electrode active material forms a uniform layer.

In addition, in another exemplary embodiment, the present invention is not limited to the above-described embodiment, and other materials and configurations that can be used as a negative electrode active material layer of an all-solid secondary battery may be applied to the negative electrode active material layer.

### Solid electrolyte layer

The solid electrolyte layer may be manufactured by a solid electrolyte formed from a sulfide-based solid electrolyte material.

The solid electrolyte material used in the present disclosure may be any suitable solid electrolyte capable of conducting metal ions. As the solid electrolyte, a material containing one or more elements selected from the group consisting of sulfur, silicon, phosphorus, and boron may be used among the sulfide-based solid electrolyte materials. Accordingly, lithium conductivity of the solid electrolyte layer is improved, and battery characteristics of the all-solid-state battery are improved. Particularly, as the solid electrolyte, a solid electrolyte containing at least sulfur (S), phosphorus (P), and lithium (Li) as constituent elements may be used. Particularly, a solid electrolyte containing an argyrodite-based lithium (Li₆PS₅Cl) may be used. The solid electrolyte may include a mixture of any of the electrolytes listed above. The solid electrolyte may have a thickness of 1 µm to 50 µm.

### Positive electrode active material layer

A slurry is prepared by mixing a material (a positive electrode active material, a binder, etc.) constituting a positive electrode active material layer with a non-polar solvent. Subsequently, as illustrated in FIG. 5 or FIG. 6, the obtained slurry is coated on a current collector coated with a positive electrode characteristic material layer, and dried.

The positive electrode active material may be a positive electrode active material capable of reversibly occluding and releasing lithium ions.

For example, the positive electrode active material may be, for example, in a powder or granular form, and may be formed using a lithium salt such as lithium cobalt acid (hereinafter, referred to as LCO), lithium nickel oxide, lithium nickel cobalt oxide, lithium nickel cobalt aluminum oxide (hereinafter, referred to as NCA), lithium nickel cobalt manganese oxide (hereinafter referred to as NCM), and lithium manganate, lithium iron phosphate, nickel sulfide, copper sulfide, sulfur, iron oxide, vanadium oxide, or the like. The positive electrode active materials may be used alone, respectively, and may be used in combination of two or more thereof.

### [Evaluation of current collector and all-solid-state battery]

### Evaluation of resistivity

The resistivity of each of the current collectors according to Examples 1 to 14 and Comparative Examples 1 to 16 manufactured as described above was measured according to ASTM D991(Four-Point-Probe) standard, the measured resistivity was determined according to the following evaluation criteria, the results of which are shown in Table 3 and Table 4 below.
∘: 15×10⁻⁸ Ωm or less
△: Greater than 15×10⁻⁸ Ωm to 20×10⁻⁸ Ωm or less
∘: Greater than 20×10⁻⁸ Ωm

### Evaluation of tensile strength

The tensile strength of each of the current collectors according to Examples 1 to 8 and Comparative Examples 1 to 10 was measured according to ASTM D882 standard. The measured tensile strength was determined according to the following evaluation criteria, and the results are shown in Table 3 below.
∘: 800 MPa or greater
X: Less than 800 MPa

### Evaluation of corrosion resistance

The corrosion resistance of each of the current collectors according to Examples 8 to 14 and Comparative Examples 11 to 16 in which a metal oxide layer was formed were measured using cyclic voltammetry (CV). In this case, the measurement temperature was 50 °C, the range of the applied voltage was 0 V to 5 V, and the scan rate was 5 mV/sec. The measurement was conducted using each of the current collectors of Examples 8 to 14 and Comparative Examples 11 to 16 as an electrode, an argyrodite-based Li₆PS₅Cl as an electrolyte, and lithium metal as a counter electrode. The measured corrosion resistance results were determined according to the following evaluation criteria, and the results are shown in Table 4 below.
∘: Current density of 50 µA/cm² or less after 30 cycles
X: Current density of 50 µA/cm² or greater after 30 cycles

### Evaluation of battery driving

In addition, the all-solid-state battery manufactured using each of the current collectors according to Examples 1 to 8 and Comparative Examples 1 to 10 was charged at 0.1 C until the voltage reached 4.2 V at 60 °C, and was discharged at 0.5 C until the voltage reached 2.5 V to confirm whether the battery was driven, and the results are shown in Table 3 below.

**[Table 3]**

| Compositions | Resistivity | Tensile strength | Application of bipolar current collector Whether battery is driven |
|---|---|---|---|
| Example 1 | △ | ○ | ○ |
| Example 2 | △ | ○ | ○ |
| Example 3 | ○ | ○ | ○ |
| Example 4 | ○ | ○ | ○ |
| Example 5 | ○ | ○ | ○ |
| Example 6 | ○ | ○ | ○ |
| Example 7 | ○ | ○ | ○ |
| Example 8 | ○ | ○ | ○ |
| Comparative Example 1 | X | ○ | X |
| Comparative Example 2 | X | ○ | X |
| Comparative Example 3 | △ | ○ | X |
| Comparative Example 4 | △ | ○ | X |
| Comparative Example 5 | X | ○ | X |
| Comparative Example 6 | X | ○ | X |
| Comparative Example 7 | ○ | ○ | X |
| Comparative Example 8 | ○ | ○ | X |
| Comparative Example 9 | △ | X | X |
| Comparative Example 10 | △ | X | X |

As can be confirmed in Table 3 above, in the case of Examples 1 to 8 and Comparative Examples 3, 4, 7, and 8 of the present invention, resistivity characteristics and mechanical strength characteristics required for the current collector are satisfied, and particularly, it was confirmed that Examples 3 to 8 and Comparative Examples 3 and 4 have good properties in terms of both resistivity and tensile strength. However, when the current collectors are applied in the form of a bipolar current collector to an all-solid-state battery, it can be seen that the battery is not driven in the case of Comparative Examples 1 to 10.

Particularly, in the case of Comparative Example 9, the nickel content is 36 wt%, so that the material itself has high resistivity, and the current collector substrate is thin, and in the case of Comparative Example 10, the current collector substrate is thin, so that even if a positive electrode characteristic material layer and a negative electrode characteristic material layer are formed similar to those of Examples, when applied to a bipolar current collector, it is difficult for a battery to be driven normally.

Accordingly, it can be confirmed that if a current collector satisfying the thickness range of the current collector substrate and the material layer having negative electrode/positive electrode characteristics according to Examples 1 to 8 of the present invention is used, it is possible to maintain battery performance by imparting the same level of productivity as that of typical copper aluminum foils while securing the lightweight nature of a battery, and there are effects of lowering unit production cost and improving economic feasibility through productivity improvement.

In addition, the evaluation results of the resistivity, the tensile strength, and the corrosion resistance of the current collectors manufactured according to Examples 9 to 14 and Comparative Examples 11 to 16 are summarized in Table 4 below.

**[Table 4]**

| Compositions | Resistivity | Strength | Corrosion resistance |
|---|---|---|---|
| Example 9 | ○ | ○ | ○ |
| Example 10 | ○ | ○ | ○ |
| Example 11 | ○ | ○ | ○ |
| Example 12 | ○ | ○ | ○ |
| Example 13 | ○ | ○ | ○ |
| Example 14 | ○ | ○ | ○ |
| Comparative Example 11 | Cannot be produced | Cannot be produced | Cannot be produced |
| Comparative Example 12 | ○ | ○ | X |
| Comparative Example 13 | ○ | ○ | X |
| Comparative Example 14 | ○ | ○ | X |
| Comparative Example 15 | ○ | ○ | X |
| Comparative Example 16 | ○ | ○ | X |

As can be confirmed in Table 4 above, in the case of Examples 9 to 14 having the structure of a metal, a first oxide layer, and a second oxide layer, it is possible to maintain battery performance by imparting the same level of conductivity as that of a typical copper foil (Cu foil) while securing excellent corrosion resistance of a battery. In addition, it is possible to confirm effects of lowering unit production cost and improving economic feasibility through productivity improvement.

Meanwhile, it was difficult to manufacture Comparative Example 11 for evaluation, and it was confirmed that Comparative Examples 12 to 16 had the same level of resistivity and strength when compared to the embodiment of the present invention, but had lower corrosion resistance than that of Examples 9 to 14 of the present invention.

Although the present invention has been described with reference to the above-described embodiments, it will be understood by those skilled in the art that various modifications and changes can be made to the present invention without departing from the spirit and scope of the present invention as set forth in the claims below.

## Claims

1. A current collector comprising:
a current collector substrate made of an alloy including iron (Fe) and nickel (Ni); and
a positive electrode characteristic material layer formed on one surface of the current collector substrate.

2. A current collector comprising:
a current collector substrate made of an alloy including iron (Fe) and nickel (Ni); and
a negative electrode characteristic material layer formed on one surface of the current collector substrate.

3. A current collector comprising:
a current collector substrate made of an alloy including iron (Fe) and nickel (Ni);
a positive electrode characteristic material layer formed on one surface of the current collector substrate; and
a negative electrode characteristic material layer formed on the other surface of the current collector substrate.

4. The current collector of any one of claim 1 to claim 3, wherein the alloy including iron (Fe) and nickel (Ni) comprises 3 wt% to 32 wt% or 40 wt% to 90 wt% of nickel (Ni), and the remainder being iron (Fe) and inevitable impurities.

5. The current collector of any one of claim 1 to claim 3, wherein the current collector substrate has a thickness of 3.5 µm to 20 µm.

6. The current collector of claim 1 or claim 3, wherein the positive electrode characteristic material layer comprises at least one or more selected from the group consisting of aluminum (Al), nickel (Ni), titanium (Ti), and an alloy thereof.

7. The current collector of claim 2 or claim 3, wherein the negative electrode characteristic material layer comprises at least one or more selected from the group consisting of titanium (Ti), vanadium (V), chromium (Cr), manganese (Mn), iron (Fe), cobalt (Co), nickel (Ni), copper (Cu), zinc (Zn), molybdenum (Mo), silver (Ag), tantalum (Ta), tungsten (W), cobalt (Co), gold (Au), ruthenium (Ru), platinum (Pt), iridium (Ir), and an alloy thereof.

8. The current collector of claim 1 or claim 3, wherein the positive electrode characteristic material layer has a thickness of 0.09 µm to 2 µm.

9. The current collector of claim 2 or claim 3, wherein the negative electrode characteristic material layer has a thickness of 10 nm to 1 µm.

10. The current collector of any one of claim 1 to claim 3, wherein the current collector has a resistivity value of 20×10⁻⁸ Ωm or less.

11. The current collector of any one of claim 1 to claim 3, wherein the current collector substrate has an average crystallite size of 15nm or less (excluding 0 nm), and the current collector substrate has a tensile strength of 800 MPa or greater, and an elongation of 2% or greater.

12. The current collector of any one of claim 1 to claim 3, wherein the current collector substrate is manufactured by electroforming.

13. The current collector of claim 1, wherein the positive electrode characteristic material layer comprises a metal oxide layer, wherein the metal oxide layer has a gradient composition in which the oxygen concentration increases continuously or intermittently toward the surface from the current collector substrate side.

14. The current collector of claim 2, wherein the negative electrode characteristic material layer comprises a metal oxide layer, wherein he metal oxide layer has a gradient composition in which the oxygen concentration increases continuously or intermittently toward the surface from the current collector substrate side.

15. The current collector of claim 3, wherein:
the positive electrode characteristic material layer comprises a metal oxide layer; and
the negative electrode characteristic material layer comprises a metal oxide layer, wherein
the metal oxide layers respectively included in the positive electrode characteristic material layer and the negative electrode characteristic material layer have a gradient composition in which the oxygen concentration increases continuously or intermittently toward the surface from the current collector substrate side.

16. The current collector of any one of claim 13 to claim 15, further comprising a metal layer positioned between the current collector substrate and the metal oxide layer.

17. The current collector of any one of claim 13 to claim 15, wherein a metal constituting the metal oxide layer and a metal constituting the metal layer are the same.

18. The current collector of claim 16, wherein the metal oxide layer has a thickness of 4.5 nm to 1 µm.

19. The current collector of any one of claim 13 to claim 15, wherein the metal oxide layer has a composition represented by Formula 1 below, overall.
[Formula 1] TiOₓ(0<x<2)

20. The current collector of any one of claim 13 to claim 15, wherein the metal oxide layer is formed by physical vapor deposition (PVD).

21. A secondary battery comprising:
a first current collector;
a first positive electrode active material layer formed on the first current collector;
a first electrolyte layer formed on the first positive electrode active material layer;
a first negative electrode active material layer formed on the first electrolyte layer;
a second current collector formed on the first negative electrode active material layer;
a second positive electrode active material layer formed on the second current collector;
a second electrolyte layer formed on the second positive electrode active material layer;
a second negative electrode active material layer formed on the second electrolyte layer; and
a third current collector formed on the second negative electrode active material layer, wherein
the second current collector is the current collector which has both negative electrode and positive electrode characteristics as set forth in claim 3 or claim 15.

22. The secondary battery of claim 21, wherein the first electrolyte layer and the second electrolyte layer comprise a solid electrolyte.
